# EUROPÄISCHE PATENTSCHRIFT

(11) **EP 0 577 987 B1**
(45) Veröffentlichungstag und Bekanntmachung des Hinweises auf die Patenterteilung: **26.11.1997**
(21) Anmeldenummer: 93109154.0
(22) Anmeldetag: 08.06.1993
(51) Int. Cl.: H02P 9/30, H02J 7/16, H02J 7/14

(54) **Einrichtung zur Regelung der Ausgangsspannung eines von einer Brennkraftmaschine angetriebenen Generators**
Device for controlling the output voltage of an engine-driven generator
Dispositif pour le contrôle de la tension de sortie d'une générateur entraîné par un moteur à combustion interne

(30) Priorität: 04.07.1992 DE 4222072
(43) Veröffentlichungstag der Anmeldung: 12.01.1994
(73) Patentinhaber: ROBERT BOSCH GMBH, 70442 Stuttgart (DE)
(72) Erfinder: Kohl, Walter, D-76467 Bietigheim (DE); Meyer, Friedhelm, Dipl.-Ing., D-75428 Illingen (DE); Mittag, Rainer, Dipl.-Ing., D-70806 Kornwestheim (DE); Suelzle, Helmut, Dipl.-Ing. (FH), D-71726 Benningen (DE)

(56) Entgegenhaltungen:
- EP-A- 0 430 203
- DE-A- 3 246 322
- US-A- 4 258 307

## Beschreibung

### Stand der Technik

Die Erfindung betrifft eine Einrichtung zur Regelung der Ausgangsspannung eines von einer Brennkraftmaschine angetriebenen Generators nach der Gattung des Hauptanspruchs.

Zur elektrischen Energieversorgung eines Kraftfahrzeuges werden Generatoren eingesetzt, die vom Motor des Fahrzeugs angetrieben werden. Diese Generatoren sind üblicherweise Drehstromgeneratoren mit einer Erregerwicklung, die vom Erregerstrom durchflossen wird, wobei ein Spannungsregler den Erregerstrom so regelt, daß die Ausgangsspannung des Generators im wesentlichen konstant ist und etwas höher ist als die Nennspannung der zu ladenden Batterie.

Im Startfall wird der Motor von einem Starter auf die erforderliche Mindestdrehzahl gebracht, nach Erreichen dieser Mindestdrehzahl wird der Starter abgekoppelt. Da der Motor zusätzlich den Generator antreiben muß, verlängert sich die Startphase.

Auch nach Abschluß der Startphase kann durch die Zuschaltung von starken Verbrauchern die Drehzahl des Motors kurzfristig absinken, es ist daher beispielsweise in der DE-OS 38 43 161 vorgesehen, eine herkömmliche Generatoranlage für eine Brennkraftmaschine mit einem von der Brennkraftmaschine antreibbaren Generator so weiterzubilden, daß eine Auswerteschaltung aufgenommen wird, der Eingangsgrößen zugeführt werden, beispielsweise Motordrehzahl, Generatorspannung, Batteriespannung usw. und die in Abhängigkeit von den zugeführten Größen beispielsweise den Erregerstrom des Generators beeinflußt, um die Belastung für den Motor zu verringern. Eine Starterkennung wird bei dieser Generatoranlage jedoch nicht durchgeführt, es kann daher auch keine Reduzierung des Erregerstromes während des Startvorgangs zur Verkürzung des Startvorgangs erfolgen.

### Vorteile der Erfindung

Die erfindungsgemäße Einrichtung zur Regelung der Ausgangsspannung eines von einer Brennkraftmaschine angetriebenen Generators hat den Vorteil, daß die Belastung des Starters vermindert wird. Erzielt wird dieser Vorteil durch die kennzeichnenden Merkmale des Anspruchs 1.

Wie lange die Startphase bzw. die Zeit, während der der Erregerstrom reduziert ist, dauert ist individuell wählbar und kann in vorteilhafter Weise als feste Zeitspanne definiert werden oder als Zeit, bis der Motor eine bestimmte Drehzahl erreicht hat oder bis ein bestimmtes Signal vom Starter kommt.

Weitere Vorteile der Erfindung ergeben sich durch die kennzeichnenden Merkmale der Unteransprüche, dabei wird eine vorteilhafte Einrichtung erhalten, indem dem Spannungsregler eine Steuereinrichtung zugeordnet wird, die während der Startphase den Erregerstrom begrenzt.

Aus der EP-A-0 430 203 ist ein Spannungsreglersystem für einen in einem Fahrzeug eingesetzten Generator bekannt, bei dem der durch die Erregerwicklung fließende Erregerstrom so geregelt wird, daß er während einer wählbaren Zeit nach dem Start begrenzt wird. Nach Ablauf dieser Zeitspanne wird der Erregerstrom vom Spannungsregler in üblicher Weise so geregelt, daß die Ausgangsspannung des Generators im Wesentlichen konstant bleibt. Hinweise bezüglich der Stärke des Erregerstromes während der dem Start folgenden Phase werden nicht gegeben.

Aus der US-A-4 258 307 ist ein weiteres Spannungsreglersystem für einen in einem Fahrzeug eingesetzten Generator bekannt, bei dem der Erregerstrom des Generators während einer wählbaren Startphase begrenzt wird. Wie lange diese Startphase dauert, wird gegebenenfalls durch Auswertung geeigneter Meßgrößen festgelegt, wobei beispielsweise eine Erregerstrombegrenzung durchgeführt wird bis der Motor des Fahrzeuges eine bestimmte Drehzahl erreicht. Der begrenzte Erregerstrom soll dabei 300 - 500 mA nicht übersteigen.

Besonders vorteilhaft ist, daß die Erregerstrombegrenzung je nach Erfordernissen ausgewählt werden kann, so kann beispielsweise die Erregerstrombegrenzung realisiert werden, indem die Steuereinrichtung den Spannungsregler so beeinflußt, daß die Generatorspannung UD+ während des Startvorgangs auf einen festen Spannungswert begrenzt wird, es sind dann keine zusätzlichen Generatoranschlüsse erforderlich.

Eine andere Möglichkeit der Erregerstrombegrenzung besteht darin, die Ausgangsspannung des Generators während der Startphase auf einen Spannungswert zu begrenzen, der wenig unterhalb der Bordnetzspannung liegt, bei diesem Verfahren ist eine besonders genaue Regelung zu erzielen.

In vorteilhafter Weise ist es auch möglich, die an der Generatorklemme DF anstehende Spannung für die Erregerstrombegrenzung auszuwerten und die Spannung so zu begrenzen, daß ihr Wert geringfügig unterhalb des Spitzenwertes an DF liegt.

Besonders vorteilhaft ist, daß nach Beendigung der Startphase der Erregerstrom kontinuierlich erhöhbar ist, bis er den üblichen Sollwert entspricht, es wird dadurch sichergestellt, daß keine Spannungssprünge am Generator auftreten, die empfindliche elektronische Bauteile über Gebühr belasten würden.

### Zeichnung

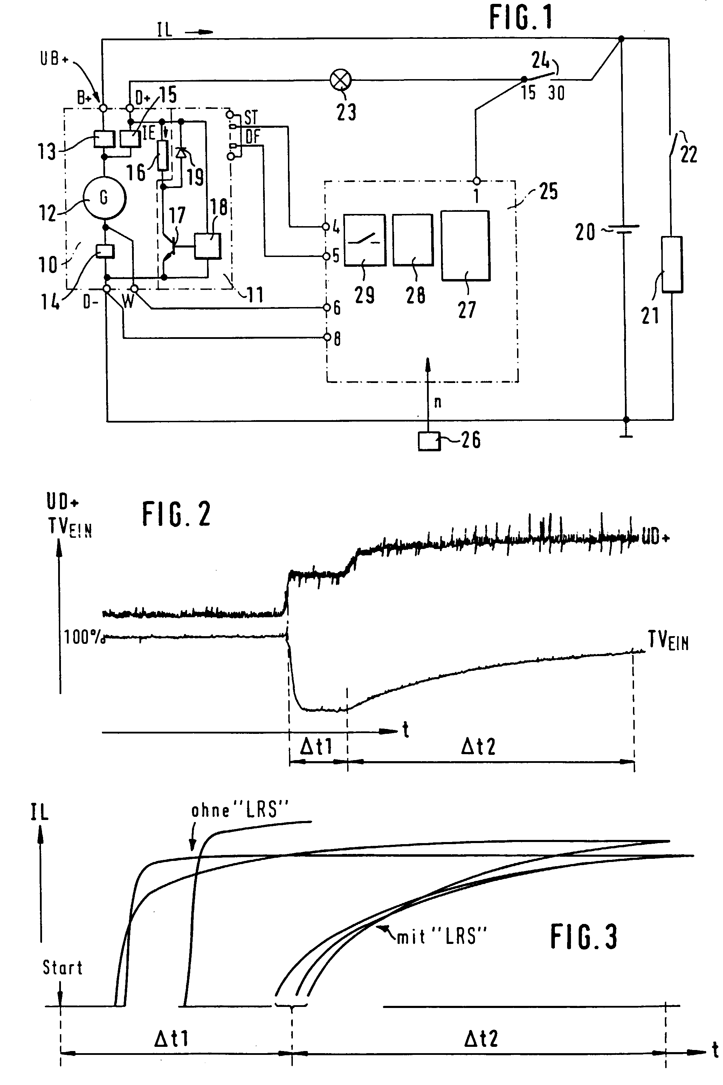

Ein Ausführungsbeispiel der Erfindung ist in Figur 1 der Zeichnung dargestellt und wird in der nachfolgenden Beschreibung näher erläutert. In Figur 2 ist die an D+ anliegende Spannung UD+ über der Zeit t aufgetragen, ebenso das Erregerstrom-Tastverhältnis TV_{EIN} über der Zeit unter Berücksichtigung, daß während der Startphase der Erregerstrom begrenzt wird.

In Figur 3 ist der Laststrom IL über der Zeit aufgetragen, dabei repräsentieren die Kurven ohne "LRS" den zeitlichen Verlauf der Lastströme ohne Erregerstrombegrenzung, während die Kurven mit "LRS" den zeitlichen Verlauf der Lastströme mit Erregerstrombegrenzung angeben, wobei jeweils drei Versuche durchgeführt wurden.

### Beschreibung des Ausführungsbeispiels

In Figur 1 ist ein erfindungsgemäßes Generatorsystem dargestellt, das eine Generatoreinheit 10 und einen Spannungsregler 11 umfaßt, wobei die Generatoreinheit 10 aus dem Generator 12 besteht, der über eine Diodenbrücke 13 mit der Klemme B+ der Generatoreinheit 10 verbunden ist und über eine Diodenbrücke bzw. Zenerdiodenbrücke 14 mit der Klemme D- der Generatoreinheit 10 verbunden ist.

Weiterhin umfaßt die Generatoreinheit 10 noch eine Erregerdiodenbrückenschaltung 15, die an Klemme D+ geführt ist und über die Erregerwicklung 16 mit dem Schalttransistor 17 des Spannungsreqlers 11 verbunden ist. Dieser Spannungsregler 11 weist zusätzlich noch eine Steuereinrichtung 18 auf, die zwischen Klemme D+ und D- liegt und den Schalttransistor 17 ansteuert. Parallel zur Erregerwicklung 16 liegt eine Diode 19.

Die Klemme B+ der Generatoreinheit 10 ist an den Pluspol der Batterie 20 angeschlossen, deren Minuspol auf Masse liegt. Parallel zur Batterie 20 liegt ein Verbraucher 21, der über einen Schalter 22 zuschaltbar ist. Dieser Verbraucher soll die Gesamtheit der Bordnetzverbraucher darstellen.

Die Klemme D+ der Generatoreinheit 10 ist über die Ladekontrollanzeige 23 mit dem Zündschalter 24 verbunden, dessen von der Ladekontrollanzeige entfernter Pol an die Batterie 20 angeschlossen ist, während der mit der Ladekontrollanzeige verbundene Pol mit einer weiteren Steuereinrichtung 25 in Verbindung steht.

Die Steuereinrichtung 25 ist über einen weiteren Anschluß mit dem Steueranschluß ST des Spannungsreglers 11 verbunden und über einen Anschluß mit der Klemme DF des Spannungsreglers verbunden. Eine weitere Verbindung besteht zwischen der Steuereinrichtung 25 und einem Anschluß W der Generatoreinrichtung 10 sowie eine Verbindung zwischen der Steuereinrichtung 25 und dem Anschluß D- der Generatoreinrichtung, die außerdem noch mit Masse in Verbindung steht. Über einen weiteren Eingang wird der Steuereinrichtung 25 die von einem Drehzahlsensor 26 ermittelte Drehrahl der Brennkraftmaschine bzw. des Motors zugeführt.

Die Steuereinrichtung 25 umfaßt wenigstens Mittel zur Zeiterfassung 27 sowie Mittel zur Drehzahlauswertung 28, wobei diese Mittel wenigstens einen Schalter 29 umfassen, dessen Position abhängig von der Drehzahl des Motors ist.

Bei dem in Figur 1 dargestellten System handelt es sich um ein Generatorsystem, bei dem die Generatorausgangsspannung mit Hilfe eines Spannungsreglers 11 so geregelt wird, daß sie unabhängig von der Generatordrehzahl auf einen konstanten Wert gehalten wird. Dazu wird der durch die Erregerwicklung 16 fließende Erregerstrom IE vom Spannungsregler 11 geregelt bzw. er wird mit Hilfe des Schalttransistors 17 den Anforderungen entsprechend ein- und ausgeschaltet. Für den vom Generator gelieferten Laststrom IL gelten je nach Regelbedingungen die in Figur 3 mit ohne "LRS" bezeichneten und über der Zeit t aufgetragenen Verläufe.

Erfindungsgemäß wird nun nach dem Einschalten des Motors, also nach dem Schließen des Zündschalters 24 der Spannungsregler 11 mit Hilfe der Steuereinrichtung 25 so beeinflußt, daß er für eine vorgebbare Zeitspanne Δt1 den Erregerstrom IE nicht in üblicherweise hochregelt, sondern auf einem bestimmten kleineren Wert hält. Durch die Vermeidung der Generatorerregung belastet der Generator den Motor nicht, so daß dieser die Startphase schneller überwindet. Nach Beendigung der Startphase schaltet sich die Steuereinrichtung 25 ab, die Ausgangsspannung des Generators wird dann in üblicher Weise vom Spannungsregler geregelt.

Die Festlegung der Zeitspanne Δ t1, während der der Erregerstrom IE auf geringen Werten gehalten wird, kann nach verschiedenen Verfahren erfolgen. Es ist dabei zu beachten, daß die Erregung so eingestellt wird, daß die Ladekontrollampe 23 möglichst schnell erlischt und daß der Generator außerdem keinen Strom an das Bordnetz abgibt. Dies bedeutet, daß die Generatorspannung UD+ minimal unter der Spannung des Bordnetzes liegen sollte. Liegt sie zu tief, ist also das Verhältnis UB+/UD+ zu groß, glimmt die Ladekontrollampe. Liegt die Generatorspannung zu hoch, gibt der Generator bereits Strom ab. Für die Definition der minimalen Spannung an D+ lassen sich drei verschiedene Verfahren angeben, die jeweils Vorteile und Nachteile aufweisen.

Beim ersten Verfahren wird ein fester Spannungswert definiert, der an der Klemme D+ anstehen soll. Der Erregerstrom wird dann so geregelt, daß genau dieser Wert auftritt. Dieses Verfahren hat den Vorteil, daß keine weiteren Anschlüsse nötig sind, es hat den Nachteil, daß je nach Ladezustand der Batterie ein Strom in die Batterie fließen kann oder von der Batterie geliefert wird, es ist damit möglich, daß die Ladekontrollampe glimmt oder daß der Generator einen geringen Strom abgibt.

Beim zweiten Verfahren wird die Spannung an D+ so festgelegt, daß sie der Bordnetzspannung -0,5 Volt entspricht. Dieses Verfahren hat den Vorteil, daß eine sehr genaue Regelung möglich ist. Es hat jedoch den Nachteil, daß das Generatorsystem eine zusätzliche Anschlußmöglichkeit benötigt, über die die Bordnetzspannung zugeführt wird.

Beim dritten Verfahren wird eine Spitzenauswertung an DF für eine Bordnetzspannung -0,5 Volt definiert. Dabei werden in vorteilhafter Weise keine weiteren Anschlüsse benötigt, Nachteil ist jedoch, daß für die Regelung ein aufwendiges Verfahren erforderlich ist.

Bei allen Verfahren wird nach der Erkennung in der Steuereinrichtung 25, daß der Startvorgang beendet ist oder daß die für die Startphase vorgegebene Zeitspanne Δt1 abgelaufen ist, der Erregerstrom IE kontinuierlich erhöht, bis die reguläre Regelspannung, die etwas über der Batteriespannung liegt, erreicht ist.

Zur Erkennung des Endes der Startphase, deren Dauer Δt1 sein soll, wird in der Steuereinrichtung 25 die Drehzahl des Motors ausgewertet. Diese Drehzahl wird von einem Drehzahlsensor 26 geliefert und der Steuereinrichtung 25 zugeführt. Durch Vergleich der aktuellen Drehzahl mit einer vorgebbaren Schwellendrehzahl wird in der Steuereinrichtung 25 erkannt, ob der Startvorgang vorliegt oder bereits beendet ist.

Das Ende der Startphase kann auch erkannt werden, indem beispielsweise in der Steuereinrichtung 25 eine Zeitmessung abläuft, die nach Ablauf von Δt1 ein entsprechendes Signal abgibt. Andere Möglichkeiten der Erkennung des Endes der Startphase sind möglich, beispielsweise über das Erkennen des Auskoppelns des Starters, das ein charakteristisches Signal erzeugt oder mittels beliebiger anderer Signale, die für das Startende charakterisch sind.

Das Erkennen des Endes der Startphase führt dazu, daß eine Umschaltung der Schaltmittel 29 erfolgt, sodaß danach der Erregerstrom erhöht wird.

Für den Übergang von der verminderten Erregung zur eigentlichen Erregung ist ein gleitender Übergang möglich, der bestmögliche Übergang kann mit Hilfe von in der Steuereinrichtung 25 abgespeicherten Kenndaten erfolgen Dieser Übergang vom verminderten Erregerstrom zum üblichen Erregerstrom erfolgt während einer mit Δt2 bezeichneten Zeitspanne.

In Figur 3 sind mit "LRS" sich möglicherweise einstellende Laststromverläufe angegeben, wobei innerhalb der Zeitspanne Δt1 der Erregerstrom klein gehalten wird und nach Ablauf der Zeitspanne Δt1 innerhalb einer Zeitspanne Δt2 ein Übergang auf den normalen Erregerstrom IE erfolgt.

In Figur 2 ist der Verlauf der Spannung UD+ an der Klemme D+ über der Zeit sowie das Erregerstrom-Tastverhaltnis TV_{EIN} des Spannungsreglers 11 über der Zeit t für einen Versuchsfall aufgetragen. Bevor der Motor läuft stellt sich an D+ eine von der Batteriespannung bzw. sonstigen Bordnetzgegebenheiten abhängige etwa konstante Spannung ein, das Erregerstrom-Tastverhältnis TV_{EIN} des Spannungsreglers 11 wäre 100%, da der Generator nicht läuft.

Nach dem Start des Motors dreht sich auch der Generator, die Spannung an D+ erhöht sich. Gleichzeitig wird die Begrenzung des Erregerstromes aktiv, indem die Steuereinrichtung 25 den Spannungsregler 11 so beeinflußt, daß der Erregerstrom auf den niedrigen Wert abgesenkt wird, der während der Startphase Δt1 eine Stromabgabe des Generators verhindern soll und die Ladekontrollanzeige erlöschen läßt.

Es ist zu erkennen, daß während der Zeitspanne Δt1, während der der Erregerstrom klein gehalten wird, die Spannung UD+ konstant ist, ebenso ist das Erregerstrom-Tastverhältnis TV_{EIN} des Spannungsreglers konstant.

Nach dem Ende der Startphase, also nach Ablauf der Zeitspanne Δt1, die wie bereits erläutert, erkannt wird, wird während der Zeitspanne Δt2 der Erregerstrom kontinuierlich erhöht, bis er nach Ablauf von Δt2 einen Wert erreicht hat, der die üblicherweise gewünschte Generatorausgangsspannung erzeugt. Danach beginnt die normale Spannungsregelung.

Während der Übergangsphase ist die Spannung UD+ höher als während der Startphase und erreicht nach Ende von Δt2 den geregelten Sollwert. Das Erregerstrom-Tastverhältnis TV_{EIN} des Spannungsreglers steigt während der Übergangsphase an und erreicht nach Ablauf von Δt2 den durch die Bordnetz- bzw. Batteriebedingungen bedingten Wert.

## Patentansprüche

1. Einrichtung zur Regelung der Ausgangsspannung eines von einer Brennkraftmaschine, die von einem Starter im Startfall auf eine Mindestdrehzahl gebracht wird, angetriebenen Generators (12), mit einer Erregerwicklung (16) und einem Spannungsregler (11), der den durch die Erregerwicklung (16) fließenden Erregerstrom (IE) regelt, wobei dem Spannungsregler (11) eine Steuereinrichtung (25) zugeordnet ist, die während der Startphase (Δt1) den Erregerstrom (IE) begrenzt, dadurch gekennzeichnet, daß der Erregerstrom (IE) durch die Steuereinrichtung (25) während der Startphase (Δt₁) so begrenzt wird, daß die Generatorspannung (UD+) minimal unter der Bordnetzspannung liegt, so daß ein Glimmen einer Ladekontrolleinrichtung (23) vermieden und eine Stromabgabe durch den Generator (12) verhindert wird.

2. Einrichtung nach Anspruch 1, dadurch gekennzeichnet, daß die Steuereinrichtung (25) das Ende der Startphase (Δt1) erkennt und die Begrenzung des Erregerstromes (IE) aufhebt.

3. Einrichtung nach Anspruch 1 oder 2, dadurch gekennzeichnet, daß die Begrenzung des Erregerstromes (IE) so gewählt wird, daß die Generatorspannung (UB₊) einen vorgebbaren festen Wert beträgt.

4. Einrichtung nach Anspruch 1 oder 2, dadurch gekennzeichnet, daß die Begrenzung des Erregerstromes (IE) so gewählt wird, daß die an der Generatorklemme (DF) gemessene Spitzenspannung geringfügig niedriger ist als die an (DF) zulässige spannung.

5. Einrichtung nach einem der vorhergehenden Ansprüche, dadurch gekennzeichnet, daß nach Beendigung der Startphase der Erregerstrom während einer Zeitspanne (Δ t2) kontinuierlich erhöht wird, bis er dem üblichen Sollwert entspricht.

6. Einrichtung nach einem der vorhergehenden Ansprüche, dadurch gekennzeichnet, daß die Steuereinrichtung (25) nach Beendigung der Startphase (Δ t1) inaktiv geschaltet wird.

7. Einrichtung nach einem der vorhergehenden Ansprüche, dadurch gekennzeichnet, daß das Ende der Startphase (Δ t1) aus dem Vergleich der Motordrehzahl mit einem vorgegebenen Drehzahlwert erkannt wird.

8. Einrichtung nach einem der vorhergehenden Ansprüche, dadurch gekennzeichnet, daß das Ende der Startphase (Δ t1) durch Vergleich der gemessenen Zeit mit einer vorgebbaren Zeitspanne erkannt wird.

9. Einrichtung nach einem der vorhergehenden Ansprüche 1 bis 8, dadurch gekennzeichnet, daß das Ende der Startphase (Δ t1) durch Auswertung eines charakteristischen Signales erkannt wird.

## Claims

1. Device for controlling the output voltage of a generator (12) driven by an internal combustion engine, which in the case of starting is brought to a minimum speed by a starter, having an excitation winding (16) and a voltage regulator (11) which regulates the exciting current (IE) flowing through the excitation winding (16), the voltage regulator (11) being assigned a control device (25) which limits the exciting current (IE) during the starting phase (Δ t1), characterized in that the exciting current (IE) is limited during the starting phase (Δt1) by the control device (25) such that the generator voltage (UD+) is minimally below the vehicle electrical voltage, with the result that glowing of a charge-control device (23) is avoided and the generator (12) is prevented from outputting current.

2. Device according to Claim 1, characterized in that the control device (25) detects the end of the starting phase (Δ t1) and cancels the limitation of the exciting current (IE).

3. Device according to Claim 1 or 2, characterized in that the limitation of the exciting current (IE) is selected such that the generator voltage (UB+) has a prescribable fixed value.

4. Device according to Claim 1 or 2, characterized in that the limitation of the exciting current (IE) is selected such that the peak voltage measured at the generator terminal (DF) is slightly lower than the voltage permissible at (DF).

5. Device according to one of the preceding claims, characterized in that after termination of the starting phase the exciting current is increased continuously during a period (Δ t2) until it corresponds to the usual desired value.

6. Device according to one of the preceding claims, characterized in that the control device (25) is switched to be inactive after termination of the starting phase (Δ t1).

7. Device according to one of the preceding claims, characterized in that the end of the starting phase (Δ t1) is detected by comparing the engine speed with a prescribed speed value.

8. Device according to one of the preceding claims, characterized in that the end of the starting phase (Δ t1) is detected by comparing the measured time with a prescribable period.

9. Device according to one of the preceding Claims 1 to 8, characterized in that the end of the starting phase (Δ t1) is detected by evaluating a characteristic signal.

## Revendications

1. Dispositif pour régler la tension de sortie d'un générateur (12), entraîné par un moteur à combustion interne, dont la vitesse de rotation est amenée, lors du démarrage, à une valeur minimale par un démarreur, dispositif comprenant un bobinage d'excitation (16) et un régulateur de tension (11) qui règle le courant d'excitation (IE) qui passe à travers le bobinage d'excitation (16), un dispositif de commande (25) étant associé au régulateur de tension (11), dispositif qui pendant la phase (Δt1) de démarrage limite le courant d'excitation (IE),
caractérisé en ce que
le courant d'excitation (IE) est limité par le dispositif de commande (25) pendant la phase de démarrage (Δt1), de telle sorte que la tension du générateur (UD+) se trouve au minimum en dessous de la tension du réseau de bord, en évitant de cette façon qu'un dispositif de contrôle de la charqe (23) donne une faible lumière et empêchant le générateur de courant (12) de délivrer du courant.

2. Dispositif selon la revendication 1,
caractérisé en ce que
le dispositif de commande (25) détecte la fin de la phase de démarrage (Δt1) et supprime la limitation du courant d'excitation (IE).

3. Dispositif selon la revendication 1 ou 2,
caractérisé en ce que
la limitation du courant d'excitation (IE) est choisie de telle façon que la tension du générateur (UB) atteigne une valeur fixe que l'on peut définir au préalable.

4. Dispositif selon la revendication 1 ou 2,
caractérisé en ce que
la limitation du courant d'excitation (IE) est choisie de telle façon que la tension de pointe, mesurée sur la borne du générateur (DF) soit légèrement plus basse que la tension autorisée en (DF).

5. Dispositif selon l'une des revendications précédentes,
caractérisé en ce que
après la fin de la phase de démarrage on augmente de façon continue le courant d'excitation pendant une période de temps (Δt2), jusqu'à ce qu'il corresponde à la valeur de seuil habituelle.

6. Dispositif selon l'une des revendications précédentes,
caractérisé en ce que
le dispositif de commande (25) est mis en position inactive après la fin de la phase de démarrage (Δt1).

7. Dispositif selon l'une des revendications précédentes,
caractérisé en ce que
l'on détecte la fin de la phase de démarrage (Δt1) en comparant la vitesse de rotation du moteur à une valeur prédéfinie de la vitesse de rotation.

8. Dispositif selon l'une des revendications précédentes,
caractérisé en ce que
l'on détecte la fin de la phase de démarrage (Δt1) en comparant le temps mesuré à une période de temps que l'on peut définir au préalable.

9. Dispositif selon l'une des revendications précédentes 1 à 8,
caractérisé en ce que
l'on détecte la fin de la phase de démarrage (Δt1) en exploitant un signal caractéristique.
